# EUROPÄISCHE PATENTSCHRIFT

(11) **EP 3 708 458 B1**
(45) Veröffentlichungstag und Bekanntmachung des Hinweises auf die Patenterteilung: **23.11.2022**
(21) Anmeldenummer: 19162564.9
(22) Anmeldetag: 13.03.2019
(51) Int. Cl.: B62B 1/20, B62B 5/04

(54) **HANDWAGEN MIT EINEM GESTELL ZUR AUFNAHME EINES GEGENSTANDES, INSBESONDERE EINES ABFALLBEHÄLTERS**
TROLLEY WITH A FRAME FOR HOLDING AN OBJECT, IN PARTICULAR A WASTE CONTAINER
CHARIOT À BRAS DOTÉ D'UN CHÂSSIS DESTINÉ À LA RÉCEPTION D'UN OBJET, EN PARTICULIER UN RÉSERVOIR À DÉCHETS

(43) Veröffentlichungstag der Anmeldung: 16.09.2020
(73) Patentinhaber: Horst Broziat GmbH, 23617 Stockelsdorf (DE)
(72) Erfinder: Broziat, Horst, 23617 Stockelsdorf (DE)
(74) Vertreter: Patentanwälte Vollmann Hemmer Lindfeld Partnerschaft mbB

(56) Entgegenhaltungen:
- EP-A1- 0 774 398
- WO-A1-2004/069626
- DE-U1-202010 013 472
- US-A- 2 557 183

## Beschreibung

Die Erfindung betrifft einen Handwagen mit einem Gestell zur Aufnahme eines Gegenstands, insbesondere eines Abfallbehälters.

Zum Transport oder zum Mitführen von sperrigen und/oder schweren Gegenständen über kurze Strecken ist bekannt, einen Handwagen einzusetzen, auf dem der entsprechende Gegenstand angeordnet wird. Je nach Anwendungszweck existieren unterschiedliche Bauformen und Baugrößen mit zwei oder mehr Rädern. Zum Mitführen von Abfall- und Wäschebehältern sowie Reinigungs- und Hilfsmitteln in Hotels sind etwa vierrädrige, aufrecht verfahrbare Handwagen bekannt. Für die Straßenreinigung sind indes einachsige Handwagen zum Mitführen von Abfalltonnen bekannt. Solche Handwagen weisen zwei parallel zueinander angeordnete Räder auf und werden über einen Handgriff bewegt. Die Radachse ist üblicherweise nicht ganz mittig an der Unterseite des Handwagens angeordnet, so dass der betreffende Handwagen in einem nicht ganz aufrechten Zustand über in einem Abstand von der Radachse angeordnete Stellfüße aufgestellt wird. Zum Verfahren wird der Handwagen aufgerichtet, so dass die Stellfüße vom Boden angehoben werden.

Nachteilig insbesondere bei bekannten einachsigen Handwagen ist, dass ein Abbremsen und Arretieren zum Bestücken des Handwagens oder zum Entnehmen eines Gegenstands eine manuelle Interaktion erfordert. Aus der Bewegung heraus muss der Handwagen durch den Benutzer zunächst manuell abgebremst und dann um die Radachse leicht gekippt werden, so dass Stellfüße auf den Boden geraten und der Handwagen dann auf den Rädern und den Stellfüßen steht. Bei frequentiertem Abbremsen und Verfahren des Handwagens ist nicht auszuschließen, dass die Stellfüße bei sich noch bewegendem Handwagen den Boden erreichen, so dass bei empfindlicheren Böden das Aufstützen der Stellfüße zu einem Zerkratzen des Bodens oder zu Schleifspuren auf dem Boden führen kann oder bei rauhen Böden die Stellfüße beschädigt werden können. Werden Abfallbehälter und Reinigungsgeräte mitgeführt, die frequentiert befüllt, ausgetauscht, entnommen oder wieder in den Handwagen zurückgestellt werden, muss frequentiert einer Bewegung des Handwagens durch Abbremsen und Abstellen sowie gegebenenfalls durch Festziehen von fußbedienbaren Feststellbremsen entgegengewirkt werden.

In DE 20 2010 013 472 U1 wird ein Trolley vorgeschlagen, der zwei eine Radachse ausbildende, parallele Räder aufweist. Weiterhin sind Stellfüße vorgesehen, die bei Bodenkontakt eine Radbremse aktivieren. Beim Abbremsen ist hier allerdings mit einem Rutschen der Stellfüße auf dem Boden zu rechnen.

Aus US 2,557,183 A1 zählt ein zweiachsiger Handwagen zum Stand der Technik, dessen vordere, lenkbare Achse über einen deichselartigen Hebel in eine Fahrstellung verbringbar ist, in welcher die an der vorderen Achse angeordneten Räder frei drehbar sind, oder in eine Bremsstellung, in welcher der Boden des Wagens mit an der Unterseite des Bodens über den vorderen Rädern angeordneten Bremsklötzen auf diesen Rädern aufliegt und somit ein Rollen des Handwagens durch Bremswirkung verhindert ist. Zum Aktivieren der Bremsvorrichtung ist die Deichsel in eine senkrechte Position zu bringen, wodurch sich die am Boden des Fahrgestells befindlichen Bremsklötze auf die Räder absenken.

Vor diesem Hintergrund liegt der Erfindung die Aufgabe zugrunde, einen robusten, einachsigen Handwagen vorzuschlagen, der möglichst zuverlässig abbrems- und abstellbar ist, einen unter dem Handwagen befindlichen Boden schont und insgesamt möglichst einfach und mit geringstmöglicher manueller Interaktion zu handhaben ist.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und den Zeichnungen angegeben.

Es wird ein einachsiger Handwagen vorgeschlagen, mit einem Gestell zur Aufnahme eines Gegenstands, zwei an einer Unterseite des Handwagens drehbar gelagerten und eine Radachse ausbildenden, parallel zueinander angeordneten Rädern zum Bewegen des Handwagens auf dem Boden, und einer an der Unterseite angeordneten Bremsvorrichtung, wobei die Bremsvorrichtung ein Hebelelement aufweist, das um eine horizontale Schwenkachse schwenkbar gelagert ist und zumindest ein von der Schwenkachse beabstandetes und drehbar gelagertes Stützrad zum Aufstützen auf dem Boden aufweist, wobei die Bremsvorrichtung quer zu dem Hebelelement verlaufende und sich auf die Räder erstreckende Bremselemente aufweist, die jeweils eine mit dem jeweiligen Rad in Kontakt bringbare Bremsfläche aufweisen und vorzugsweise starr mit dem Hebelelement verbunden sind, und wobei die Bremsvorrichtung dazu ausgebildet ist, in einer Abstellposition des Handwagens mit um die Radachse zu der Bremsvorrichtung hin geneigtem Gestell das mindestens eine Stützrad auf den Boden aufzustützen und dabei die Bremsflächen an die Räder zum Bremsen der Räder zu drücken.

Der erfindungsgemäße Handwagen erfordert folglich keine manuell betätigbare Feststellbremse oder andere Mittel zum Arretieren. Stattdessen wirkt die daran angeordnete Bremsvorrichtung selbstständig. Beim Abstellen des Handwagens ist ein vorheriges Abbremsen durch den Benutzer nicht notwendig. Die Benutzung des Handwagens erfolgt indes wie bei bekannten Ausführungen. Ein Benutzer greift zwei Handgriffe des Handwagens, verkippt diesen leicht in eine Fahrposition, in der das mindestens eine Stützrad den Boden nicht berührt, und kann ihn frei auf den beiden Rädern lastend auf dem Boden bewegen. Zum Abbremsen kann der Handwagen vom Benutzer im Wesentlichen einfach losgelassen werden. Der Handwagen kippt schwerkraftbedingt aus der leicht angehobenen Fahrposition zurück in eine Abstellposition. Diese könnte, in Abhängigkeit von der Detailgestaltung und Auslegung, etwa eine aufrechte Stellung sein. Das zumindest eine Stützrad gerät dabei in Kontakt mit dem Boden und vollzieht ein Verschwenken des Hebelelements durch die von dem Stützrad einwirkende Kraft. Die Schwenkachse verläuft bevorzugt parallel zu der Radachse. Durch das Verschwenken nähern sich die Bremsflächen den Rädern, werden auf diese aufgedrückt und wirken durch die entstehende Reibung einer Rotation der Räder entgegen. Schwerkraft- und trägheitsbedingt wird mit zunehmenden Transportgewichten die resultierende Bremskraft gesteigert.

Durch die selbstständig wirkende Bremsvorrichtung können Gegenstände, beispielsweise Abfallbehälter und insbesondere Standardabfallbehälter aber auch Abfallsäcke, sicher und mühelos durch eine einzelne Person auf den Handwagen gestellt oder von dem Handwagen entnommen werden. Die Sicherheit und Ergonomie wird gegenüber herkömmlichen Ausführungen deutlich verbessert und eine zuverlässige und einfache Handhabung ist auch von einer weniger kräftigen Person möglich. Die regelmäßige Verwendung des erfindungsgemäßen Handwagens könnte überdies auch ohne vorherige Einweisung möglich sein. Da das Stützrad lediglich Auflagekräfte senkrecht zum Boden überträgt und das mindestens eine Stützrad auf dem Boden frei drehbar ist, werden auch empfindlichere Böden nicht beeinträchtigt.

Besonders bevorzugt sind die Räder und die Bremsvorrichtung derart angeordnet, dass zumindest in der Abstellposition ein Schwerpunkt des Handwagens von der Seite gesehen im Bereich zwischen der Radachse der Räder und der Drehachse des zumindest einen Stützrads liegt, also zwischen Senkrechten durch die Radachsen. Eine durch den Schwerpunkt verlaufende, zur Erdbeschleunigung parallele Linie liegt zumindest in der Abstellposition auf einem waagerechten Boden zwischen den Achsen von Rädern und Stützrad. Das Stützrad muss demnach einen Teil der Gewichtskraft des Handwagens durch eine entsprechende Gegenkraft kompensieren, die zu einem Verschwenken des Hebelelements und damit zum Aufdrücken der Bremsflächen an die Räder führt. Dadurch wird sichergestellt, dass das Eigengewicht des Handwagens zum Erzeugen einer Bremskraft führt. Weiterhin kann hierdurch die Bremskraft durch das Eigengewicht selbstständig dosiert werden.

Zur Realisierung einer auf die Räder wirkenden Bremskraft kann das Bremselement als ein vor einem Rad angeordneter Hebel ausgebildet sein, der in einem Winkel zu dem mindestens einen Hebelelement angeordnet ist und eine geringere Länge aufweist, als das mindestens eine Hebelelement. Werden mehrere Hebelelemente eingesetzt, beispielsweise jeweils ein Hebelelement für jedes Rad, kann dies in Form eines Winkelhebels realisiert werden, bei dem ein kürzerer Schenkel als Bremselement dient und ein längerer Schenkel das jeweilige Stützrad trägt oder mit einem ein einzelnes Stützrad tragendes Element verbunden ist. Alternativ dazu könnten die Bremselemente jeweils als ein Hebel ausgeführt sein, wobei beide Bremselemente miteinander und mit dem mindestens einen Hebelelement verbunden sind. Durch die unterschiedliche Wahl der Längen und damit der Hebelarme kann die auf die Räder wirkende Bremskraft verstärkt werden. Ein nur leicht zu dem mindestens einen Stützrad hin verschobener Schwerpunkt des Handwagens mit Beladung könnte folglich aufgrund der Hebelwirkung zur Erzeugung einer hohen Bremskraft genutzt werden. Das mindestens eine Hebelelement und die Bremselemente könnten in einer vorteilhaften Ausführungsform im Wesentlichen einen rechten Winkel einschließen.

Das Abbremsen könnte durch Wirkung eines einzelnen Stützrads erfolgen. In einer vorteilhaften Ausführungsform sind folglich die beiden Bremselemente drehfest über ein sich zwischen den Bremselementen erstreckendes Verbindungselement miteinander verbunden. Das Verbindungselement kann konzentrisch zu der Schwenkachse des Hebelelements oder in einem Abstand hierzu positioniert sein. Das mindestens eine Stützrad könnte an einem der Bremselemente oder an dem Verbindungselement angebracht sein. Hierbei ist zu beachten, dass ein ausreichender Hebelarm durch Wahl des Abstands zwischen dem mindestens einen Stützrad und der Schwenkachse gewährleistet ist.

Zum Halten des Stützrads ist in einer vorteilhaften Ausführungsform ein Ausleger an dem Verbindungselement angeordnet, welcher sich entlang der Unterseite erstreckt und an einem von dem Verbindungselement abgewandten Ende das zumindest eine Stützrad hält. Der Ausleger kann ein starres, längliches Element sein, das mit Hilfe eines geschlossenen Hohlprofils oder durch geeignete Versteifungselemente das Stützrad zuverlässig halten kann und sich auch bei größerer Krafteinwirkung höchstens marginal verformen sollte.

Der Gebrauch des Handwagens durch einen Benutzer wird durch Mittel zum Greifen und Bewegen des Handwagens begünstigt. Eine weiter vorteilhafte Ausführungsform weist daher ferner zwei seitlich an dem Gestell angeordnete und von dem Gestell in eine gemeinsame Richtung abstehende Handgriffe auf, die dazu ausgebildet sind, den Handwagen durch einen Benutzer in die Abstellposition oder eine Fahrposition zu schwenken. Die Handgriffe erstrecken sich bevorzugt in einen ausreichenden Abstand von dem Gestell, so dass ein Benutzer bequem laufen kann, während er die Handgriffe hält. Die Handgriffe könnten folglich stangenartig, d.h. als Stangengriffe, wie bei einer Schubkarre, ausgebildet sein. Diese könnten gebogen, geknickt, gekrümmt oder gerade ausgebildet sein und an zu greifenden Enden geeignete Griffflächen aufweisen. Diese könnten ein rutschhemmendes Material besitzen, etwa in Form eines gummiartigen Griffaufsatzes. Die Höhe der Handgriffe bzw. der zu greifenden Enden könnte in günstiger Weise nach einschlägigen anthropometrischen Normen ausgewählt werden, so dass ein ergonomisches Anheben des Handwagens von der Abstellposition in die Fahrposition und ein zumindest zeitweises Verfahren des Handwagens in der Fahrposition ermöglicht wird. Die Handgriffe könnten ferner auch einstellbar ausgeführt sein, um eine ergonomische Nutzung durch individuelles Einstellen der Handgriffe zu erlauben.

Es ist vorstellbar, dass der Handwagen gelegentlich oder häufig auf einem Fahrzeug transportiert wird, um an einen gewünschten Einsatzort zu gelangen, z.B. für eine Stadtreinigung. Hierzu ist besonders vorteilhaft, wenn die Handgriffe klappbar ausgebildet oder klappbar oder steckbar an dem Gestell gehaltert sind. Insbesondere bei Stangengriffen bietet sich eine Unterteilung in klappbare Segmente an, die über ein Gelenk miteinander verbunden sind. Das Gelenk ist etwa über eine Klemme oder eine Hülse werkzeugfrei fixierbar. Die für den Handwagen benötigte Auflage- oder Transportfläche kann durch einen abklappbaren Griff stark reduziert werden. Diese Ausgestaltung ist vorteilhaft und gegebenenfalls auch unabhängig von der Bremsanordnung realisierbar.

Bei gattungsgemäßen Handwagen ist oft das Mitführen von Arbeitsgeräten, etwa Schaufel, Besen, Rechen, Greifzange oder ähnlichem gewünscht. Eine vorteilhafte Ausführungsform weist hierfür ferner eine Ablagefläche auf, die an einer zu dem zumindest einen Stützrad gerichteten Seite des Gestells angeordnet ist und einen zumindest teilweise umlaufenden Rand aufweist, sowie mindestens eine Arretiereinrichtung an einer von der Ablagefläche beabstandeten, darüber liegenden Position des Handwagens. Die Arbeitsgeräte können leicht greifbar an dem Gestell auf die Ablagefläche gestellt und an der mindestens einen Arretiereinrichtung lösbar befestigt werden. Während die Ablagefläche das Gewicht der Arbeitsgeräte trägt, verhindern der Rand und die mindestens eine Arretiereinrichtung das Verrutschen der Arbeitsgeräte auch beim Kippen des Handwagens. Eine solche Ausbildung ist vorteilhaft, aber nicht notwendigerweise in Kombination mit der Bremsanordnung. Dann kann die Gewichtskraft der dort angeordneten Arbeitsgeräte die Bremskraft erhöhen.

In einer vorteilhaften Ausführungsform des Handwagens weist das Gestell zwei Seitenwangen auf, wobei sich zwischen aufrecht zu der Unterseite verlaufenden Vorderkanten der Seitenwangen eine zusätzliche Wandung erstreckt. Eine Draufsicht auf das Gestell zeigt folglich eine U-Form. Diese erlaubt die Aufnahme größerer Behälter, zum Beispiel eines Abfallbehälters oder eines Abfallsacks, ohne den Behälter in das Gestell heben zu müssen. Die Räder könnten außen an den beiden Seitenwangen über ein Gleit- oder Kugellager angeordnet werden. Diese U-Form schützt nicht nur den eingehängten Behälter oder Abfallsack, sondern erzeugt eine hohe Eigenstabilität bei geringem Gewicht.

Besonders bevorzugt ist das Gestell durch eine von der zusätzlichen Wandung abgewandte Öffnung zwischen den Seitenwangen zur Aufnahme eines Gegenstands geöffnet. Die Öffnung erlaubt das Einschieben oder Einbringen größerer Behälter in das Gestell. Die Öffnung ist folglich an einer von den Handgriffen und bei Benutzung an einer von dem Benutzer abgewandten Seite.

Das Gestell könnte weiterhin an einem von der Unterseite des Handwagens abgewandten oberen Ende des Gestells mindestens einen Haken zum Einhängen eines Abfallbehälters aufweisen. Das Gestell erlaubt durch seine Dimensionierung etwa die Aufnahme einer Standardmülltonne als Behälter. Der mindestens eine Haken erlaubt bei einer Kippbewegung des Handwagens von der Abstellposition zu der Fahrposition und darüber hinaus das Einhaken in ein geeignetes Formmerkmal, etwa eine Vertiefung, an dem Behälter. Durch anschließendes Zurückkippen in die Fahr- oder Abstellposition wird der Behälter vom Boden abgehoben und in das Gestell gezogen. Bei geeigneter Dimensionierung des Gestells und des mindestens einen Hakens kann der Behälter derart aufgenommen werden, dass sein Schwerpunkt sicher hinter den Rädern in Richtung des Stützrads positioniert ist. In umgekehrter Kipprichtung kann der Behälter wieder aus dem Gestell entfernt werden.

Es ist vorteilhaft, wenn die Bremsflächen jeweils einen austauschbaren Bremsbelag vorzugsweise aus Aluminium aufweisen. Das Material des Bremselements kann zur Gewährleistung der gewünschten mechanischen Stabilität je nach Einsatzzweck gewählt werden. Zur Optimierung des Bremsverhaltens kann ein geeigneter Werkstoff ausgewählt werden, der auf die Räder gedrückt wird. Durch eine Austauschbarkeit kann einer schwächer werdenden Bremswirkung bei hoher Beanspruchung entgegengewirkt werden.

Gerade bei kommunalem Einsatz kann es sich anbieten, zur Verbesserung der Sichtbarkeit des Handwagens zur Vermeidung von Unfällen eine Leuchtvorrichtung vorzusehen. Diese ist bevorzugt batteriebetrieben und bevorzugt spritzwassergeschützt und könnte seitlich an dem Gestell angeordnet sein. Je nach Anforderung kann die Leuchtfarbe der Leuchtvorrichtung gewählt werden, etwa rot-weiß oder gelb blinkend.

Besonders vorteilhaft ist es, wenn die Handgriffe vorzugsweise um die Radachse oder eine parallel dazu angeordnete Achse schwenkbar angeordnet sind und am Gestell seitlich Verriegelungsvorrichtungen zum Festlegen der Handgriffe in einer Arbeitsstellung vorgesehen sind. Diese Anordnung der Handgriffe ist auch unabhängig von der Bremseinrichtungen einem Handwagen anwendbar.

Vorteilhaft ist ein Bügel um die Radachse oder eine parallel dazu angeordnete Achse schwenkbarer vorgesehen, der sich zur Oberseite des Gestells hin erstreckt und der mit einem ausklappbaren Bodenblech bewegungsgekoppelt ist, welches in ausgeklappter Stellung des Bügels bodenparallel und in eingeklappter Stellung des Bügels etwa senkrecht angeordnet ist. Eine solche, ebenfalls unabhängig von der Bremsvorrichtung anwendbare Anordnung ermöglicht es, mit ein und demselben Handwagen sowohl Abfallbehälter, insbesondere genormte Abfallbehälter als auch Abfallsäcke oder nicht genormte Abfallbehälter zu transportieren, welche nicht eingehängt werden können, sondern eine Aufstandsfläche benötigen.

Die Erfindung ist nachfolgend anhand eines in der Zeichnung dargestellten Ausführungsbeispiels näher erläutert. Es zeigen:
- Fig. 1: den Handwagen mit einem darin angeordneten Behälter in einer Abstellposition in einer Seitenansicht,
- Fig. 2 bis 4: den unbeladenen Handwagen in unterschiedlichen Darstellungen und
- Fig. 5: den Vorgang des Einbringens eines Behälters in den Handwagen und
- Fig. 6: in perspektivischer Darstellung die Bremsvorrichtung

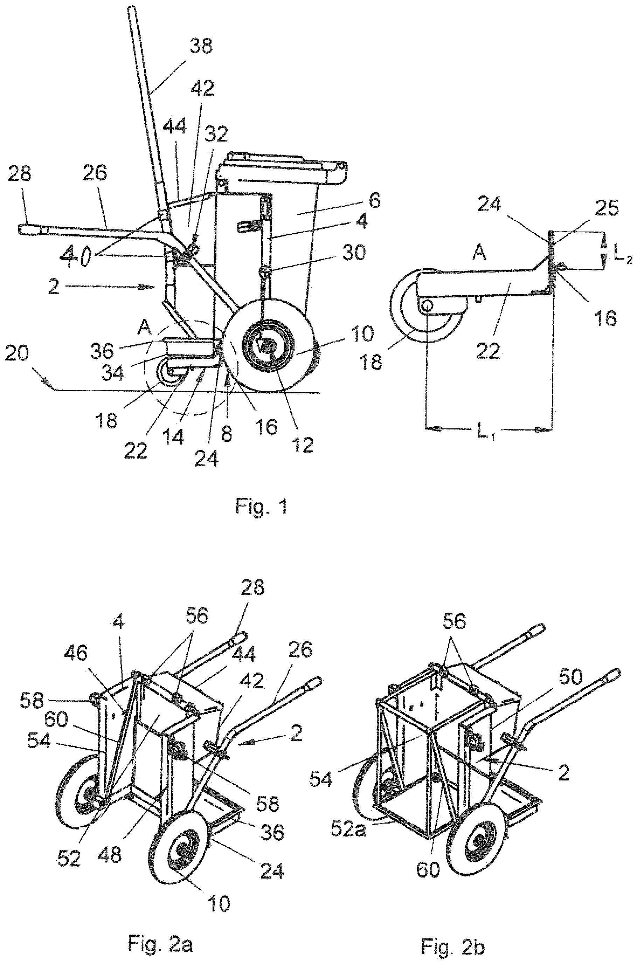

Fig. 1 zeigt einen Handwagen 2, mit einem Gestell 4 zur Aufnahme eines Gegenstands 6, der in diesem Fall als ein standardisierter Abfallbehälter dargestellt ist. Der Handwagen 2 weist an einer Unterseite 8 zwei Räder 10 auf, die parallel zueinander angeordnet sind und eine gemeinsame Radachse 12 ausbilden. An der Unterseite 8 ist ferner eine Bremsvorrichtung 14 angeordnet, die zum selbsttätigen Abbremsen des Handwagens 2 und zum Feststellen und Halten des Handwagens 2 zur Beladung oder Entladung ausgebildet ist.

Die Bremsvorrichtung 14 ist um eine horizontale etwa parallel zur Radachse 12 angeordnete Schwenkachse 16 schwenkbar gelagert und weist in dem gezeigten Ausführungsbeispiel ein drehbar gelagertes Stützrad 18 zum Aufstützen auf einem Boden 20 auf. Dieses ist an einem Hebelelement 22, welches um die Schwenkachse 16 schwenken kann, angeordnet. Das Hebelelement 22 erstreckt sich im Wesentlichen parallel und entlang der Unterseite 8 bzw. des Bodens 20. An dem Hebelelement 22 sind zwei Bremselemente 24 angeordnet, die sich quer zu dem Hebelelement 22 jeweils vor eines der Räder 10 erstrecken. Die Bremselemente 24 sind starr mit dem Hebelelement 22 verbunden. Das Hebelelement 22 kann ein plattenförmiges Bauteil oder ein Ausleger an einem sich vor den Bremselementen 24 und beiden Rädern 10 erstreckenden Bauteil sein,.

An dem Gestell 4 sind Handgriffe 26 in Form von Stangengriffen angeordnet, die Griffenden 28 zum Greifen besitzen. Die in Fig. 1 gezeigte Position ist eine Abstellposition. Dies bedeutet, dass die Handgriffe 26 losgelassen sind und der Handwagen 2 mit dem darauf befindlichen Gegenstand 6 auf den Rädern 10 und dem Stützrad 18 ruht. Der Schwerpunkt 30 des Handwagens 2 befindet sich in normaler Fahrtrichtung nach vorne gesehen somit hinter der Radachse 12, so dass das Stützrad 18 einen Teil der Gewichtskraft des Handwagens 2 nebst darauf befindlichem Gegenstand 6 aufnimmt.

Aufgrund der schwenkbaren Lagerung um die Schwenkachse 16 wird das Hebelelement 22 relativ zu dem Gestell 4 in der Zeichnungsebene in Fig. 1 im Uhrzeigersinn verschwenkt. Dadurch werden die starr mit dem Hebelelement 22 verbundenen und sich quer dazu erstreckenden Bremselemente 24 umfänglich an die Räder 10 gedrückt, so dass durch Reibung einer Rotation der Räder 10 entgegengewirkt wird. Gerät der Handwagen 2 aus einer Bewegung in den in Fig. 1 gezeigten Zustand, wird die Bewegung des Handwagens 2 folglich automatisch abgebremst. Weiterhin wird durch diese Anordnung automatisch eine vom Gewicht des Handwagens 2 und des darauf befindlichen Gegenstands 6 abhängige Bremskraft generiert. Der Handwagen 2 ist folglich sehr leicht und ergonomisch handhabbar, da er manuell nicht abgebremst werden muss. Aufgrund des sich frei drehenden Stützrades 18 kann einer Beschädigung des Bodens 20 oder der Entstehung von Schleifspuren am Boden 20 entgegengewirkt werden.

Die auf die Räder wirkende Bremskraft kann durch Hebelwirkung vergrößert werden. Das Hebelelement 22 weist etwa eine Länge L₁ in Fahrtrichtung auf, während die Bremselemente 24 jeweils eine Länge L₂ senkrecht dazu aufweisen, jeweils von der Schwenkachse 16 aus zu dem jeweiligen Krafteinleitungspunkt gemessen. Dieser ist bei einem Bremselement 24 etwa in der Mitte einer Bremsfläche 25, die auf den zugehörigen Reifen 10 gedrückt wird. Es ist besonders günstig, die Länge L₂ deutlich kleiner zu wählen als die Länge L₁, so dass bei relativ geringer durch das Stützrad 18 einwirkender Kraft gemäß dem Hebelgesetz eine dennoch relativ hohe Kraft durch das Bremselement 24 bzw. die Bremsfläche 25 auf das jeweilige Rad 10 ausgeübt werden kann.

Zum Bewegen des Handwagens 2 greift ein Benutzer die Enden 28 der Handgriffe 26 und kippt das Gestell 4 um wenige Grad in der Zeichnungsebene der Fig. 1 im Uhrzeigersinn, so dass das Stützrad 18 den Kontakt mit dem Boden 20 verliert. Die Bremselemente 24 werden dabei von den Rädern 10 gelöst und der Handwagen 2 kann auf den beiden Rädern 10 leicht verfahren werden.

Zur Realisierung einer kompakten Verstaubarkeit des Handwagens 2 können die Handgriffe 26 Gelenke aufweisen, mit denen die Handgriffe 26 zum Transport klappbar oder alternativ abnehmbar sind. Die für das Abstellen des Handwagens 2 notwendige Fläche kann damit reduziert werden. In der in den Figuren dargestellten Betriebsstellung sind die Handgriffe festgelegt. Nach Lösen der Verriegelungsvorrichtungen 32 können die Handgriffe 26 nach oben, in Fig. 1 also im Uhrzeigersinn geschwenkt werden, so dass sie nicht mehr nach hinten über den Handwagen vorstehen. Zweckmäßigerweise ist auch für diese Transportposition eine Arretierung vorgesehen.

Oberhalb der Bremsvorrichtung 14 ist eine Ablagefläche 34 mit einem zumindest teilweise umlaufenden Rand 36 vorgesehen. Der Rand 36 ist exemplarisch in Form einer aufrecht die Ablagefläche 34 umlaufenden, niedrigen Wandung ausgeführt, die eine Randverstärkung aufweisen kann. Arbeitsgeräte 38, die etwa Schaufel, Besen, Rechen und ähnliches umfassen, können auf die Ablagefläche 34 gestellt werden, um sie mitzuführen. Beispielhaft sind Arretiereinrichtungen 40 vorgesehen, die zum leicht lösbaren Festhalten der abgestellten Arbeitsgeräte 38 dienen. Diese könnte etwa herkömmlichen Gerätehaltern mit federnden Profilgummirollen entsprechen. Diese sind an dem Staukasten 42 an einer von dem Gestell 4 abgewandten Seite angeordnet, so dass die Arbeitsgeräte 38 für einen Benutzer rasch verfügbar sind und zur Entnahme sowie zum Verstauen nur wenig angehoben werden müssen. Bevorzugt besteht eine solche Arretiereinrichtung 40 aus zwei in unterschiedliche Höhe angeordneten Gerätehaltern, so dass der Stiel eines Arbeitsgeräts 38 in zwei unterschiedlichen Höhen gehaltert ist, so dass zusammen mit der Abstützung auf der Ablagefläche 34 eine erschütterungsfeste Arretiereinrichtung 40 gebildet ist. Der Staukasten 42 schließt im Wesentlichen bündig mit der Oberkante des Gestells 4 ab und weist an seiner Oberseite einen Deckel 44 zum Verschließen des Staukastens 42 auf.

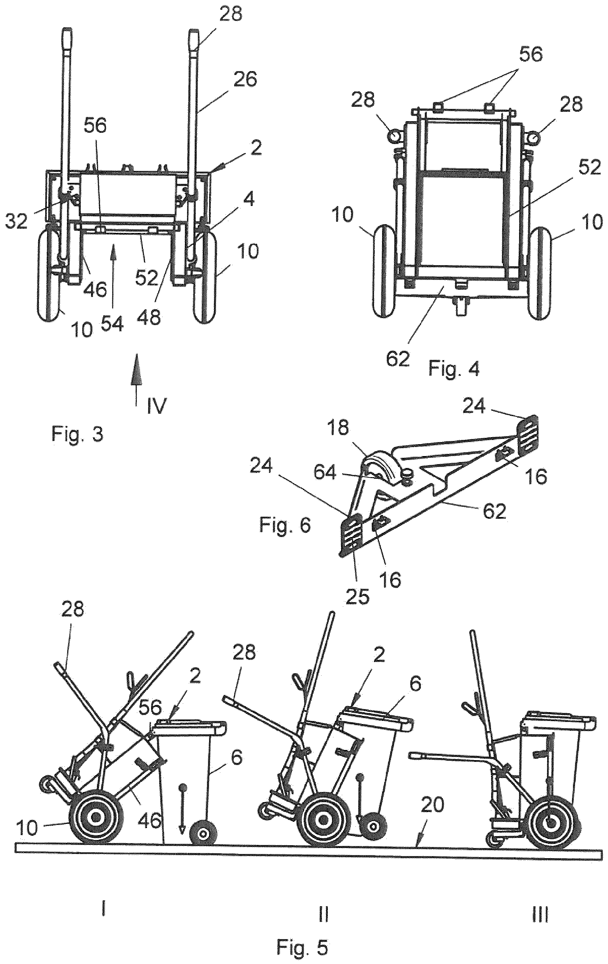

Fig. 2 zeigt eine dreidimensionale Darstellung eines leeren Handwagens 2. Hier ist ersichtlich, dass das Gestell 4 zwei Seitenwangen 46 und 48 aufweist, die an ihren Hinterkanten 50 mittels einer Wandung 52 miteinander verbunden sind. Hierdurch ergibt sich ein einseitig nach vorne offenes Gestell 4, welches an einer von den Handgriffen 26 abgewandten Vorderseite des Handwagens 2 eine Öffnung 54 aufweist. Durch diese kann der Gegenstand 6 zum Transport auf dem Handwagen 2 angeordnet werden, wie weiter nachfolgend anhand von Fig. 5 dargestellt wird. Hierzu sind direkt oberhalb des Staukastens 42, an einer Oberseite des Gestells 4, zwei nach vorne gerichtete Haken 56 angeordnet, die zum Einhängen des Gegenstands 6 ausgebildet sind.

Zur Aufnahme von Gegenständen, die nicht an den Haken 56 angebracht werden können, zum Beispiel von Abfallsäcken, kann die Wandung 52 abschnittsweise klappbar ausgestaltet, so dass sie bedarfsweise als Gestellboden fungiert. Es kann jedoch auch eine ausklappbare Bodenfläche 52a zusätzlich zu der Wandung 52 vorhanden sein, die bedarfsweise ausgeklappt und bei Nichtgebrauch an der Wandung 52 arretiert werden kann. In dem dargestellten Ausführungsbeispiel ist, wie insbesondere anhand der Fig. 2a und 2b erkennbar ist, ein ausklappbarer Bügel 60 vorgesehen, dessen unteres Ende um die Achse 12 schwenkbar ist, und dessen querverlaufender oberer Bügelteil in eingeschwenkter Stellung (Fig. 2a) am oberen Ende der Wandung 52 anliegt und in ausgeschwenkter Stellung (Fig. 2b) mit deutlichem Abstand dazu angeordnet ist. Dieser Bügel 60 ist mit der ausklappbaren Wandung 52a bewegungsgekoppelt, derart, dass beim Ausklappen des Bügels in die in Fig. 2b dargestellte Stellung die zusätzliche Wandung 52a aus ihrer senkrechten in die horizontale Stellung geschwenkt wird, in welcher sie einen Boden zur Abstützung des dort abzustellenden Abfallsackes oder -behälters bildet.

Seitlich an den Seitenwangen 46 und 48 könnten Leuchtvorrichtungen 58 angebracht sein, die insbesondere bei kommunalem Gebrauch des Handwagens 2 eine optische Hinweisfunktion erlauben. Um die Leuchtvorrichtungen 58 dauerhaft für beispielsweise eine Tag mit den erforderlichen Strom zu versorgen, ist im Staukasten 42 unten ein (nicht dargestellter) Batteriekasten vorgesehen, mit entsprechenden nach außen geführten Ladeanschlüssen sowie elektrischen Kabeln zu den Leuchtvorrichtungen 58, welche geschützt in einem umlaufenden, die Kante des abgekanteten Metallblechs schützenden Klemmschlauchs angeordnet sind.

Fig. 3 zeigt eine Draufsicht auf den Handwagen 2. Dort wird besonders die U-Form des Gestell 4 deutlich.

In Fig. 4 ist eine Vorderansicht in Richtung des Pfeils IV in Fig. 3 dargestellt. Hier ist ein Verbindungselement 62 erkennbar, das die Bremselemente 24 miteinander verbindet und eine schwenkbare Lagerung an der Schwenkachse 16 erlaubt. An dem Verbindungselement 62 ist ein Ausleger 64 angeordnet, der das Stützrad 18 trägt, wie dies insbesondere aus Fig. 6 ersichtlich ist.

Fig. 5 zeigt den Vorgang des Aufnehmens eines Behälters 6 durch den erfindungsgemäßen Handwagen 2. In der linken Teildarstellung I befindet sich der Handwagen 2 durch starkes Anheben der Griffenden 28 in einer Aufnahmeposition. Hier können die Haken 56 in eine entsprechende Ausnehmung des Behälters 6 eingehakt werden, wobei die Seitenwangen 46 und 48 den Behälter 6 bereits bereichsweise umgreifen. Der Behälter 6 ragt also leicht in die Öffnung 54 hinein. In diesem Zustand kann der Benutzer die Griffenden 28 nach unten bewegen, so dass der Handwagen 2 um die Radachse 12 herum rotiert und aufgrund des damit größer werdenden Abstandes der Haken 56 von dem Boden 20 der Behälter 6 angehoben wird (siehe Teildarstellung II). Dadurch wird er in die Öffnung 54 hineingezogen. Schließlich befindet er sich in der Teildarstellung III in der in Fig. 1 bereits gezeigten Abstellposition, in der er vollständig in den Handwagen 2 eingeführt ist. Es ist denkbar, zum Sichern des Behälters 6 einen Gurt zu spannen, der sich zwischen den Seiten Wangen 46 und 48 um den Behälter 6 herum erstreckt (nicht gezeigt) oder eine Verriegelung des Hakens vorzusehen.

### Bezugszeichenliste

- 2: Handwagen
- 4: Gestell
- 6: Gegenstand, Abfallbehälter
- 8: Unterseite
- 10: Rad
- 12: Radachse
- 14: Bremsvorrichtung
- 16: Schwenkachse
- 18: Stützrad
- 20: Boden
- 22: Hebelelement
- 24: Bremselement
- 25: Bremsfläche
- 26: Handgriff
- 28: Griffende
- 30: Schwerpunkt
- 32: Verriegelungsvorrichtung
- 34: Ablagefläche
- 36: Rand
- 38: Arbeitsgerät
- 40: Arretiereinrichtung
- 42: Staukasten
- 44: Deckel
- 46: Seitenwange
- 48: Seitenwange
- 50: Hinterkante
- 52: Wandung
- 52a: zusätzliche Wandung, ausklappbares Bodenblech
- 54: Öffnung
- 56: Haken
- 58: Leuchtvorrichtung
- 60: ausklappbarer Bügel
- 62: Verbindungselement
- 64: Ausleger

## Patentansprüche

1. Einachsiger Handwagen (2), mit einem Gestell (4) zur Aufnahme eines Gegenstands (6), mit zwei drehbar gelagerten und eine Radachse (12) aufweisenden, parallel zueinander angeordneten Rädern (10) zum Bewegen des Handwagens (2) auf einer Aufstandsfläche (20), und mit einer an der Unterseite (8) des Wagens angeordneten Bremsvorrichtung (14), wobei die Bremsvorrichtung (14) mindestens ein Hebelelement (22) aufweist, das um eine horizontale Schwenkachse (16) schwenkbar gelagert ist und zumindest ein von der Schwenkachse (16) beabstandetes und drehbar gelagertes Stützrad (18) zum Aufstützen auf der Aufstandsfläche (20) aufweist, wobei die Bremsvorrichtung (14) an dem Hebelelement (22) angeordnete und sich zu den Rädern (10) erstreckende Bremselemente (24) aufweist, die jeweils eine mit dem jeweiligen Rad (10) in Kontakt bringbare Bremsfläche (25) aufweisen und mit dem Hebelelement (22) verbunden sind, und wobei die Bremsvorrichtung (14) dazu ausgebildet ist, in einer Abstellposition des Handwagens (2), wenn das mindestens eine Stützrad (18) auf der Aufstandsfläche (20) aufsteht dabei die Bremsflächen (25) an die Räder (10) zum Bremsen der Räder (10) zu drücken.

2. Handwagen (2) nach Anspruch 1, wobei die Räder (10) und die Bremsvorrichtung (14) derart angeordnet sind, dass zumindest in der Abstellposition ein Schwerpunkt (30) des Handwagens (2) in einem Bereich zwischen der Radachse (12) und der Schwenkachse (16) des zumindest einen Stützrads (18) liegt.

3. Handwagen (2) nach einem der vorhergehenden Ansprüche, wobei das Bremselement (24) als ein auf ein Rad (10) wirkender Hebel ausgebildet ist, der in einem Winkel zu dem mindestens einen Hebelelement (22) angeordnet ist und eine geringere Länge (I2) aufweist, als die Länge (I1) des mindestens eine Hebelelements (22).

4. Handwagen (2) nach Anspruch 2 oder 3, wobei die beiden Bremselemente (24) drehfest über ein sich zwischen den Bremselementen (24) erstreckendes Verbindungselement (62) miteinander verbunden sind.

5. Handwagen (2) nach Anspruch 4, wobei ein Ausleger (64) an dem Verbindungselement (62) angeordnet ist, welcher sich entlang der Unterseite (8) erstreckt und an einem von dem Verbindungselement (62) abgewandten Ende das zumindest eine Stützrad (18) hält.

6. Handwagen (2) nach einem der vorhergehenden Ansprüche, ferner aufweisend zwei seitlich an dem Gestell (4) angeordnete und von dem Gestell (4) vorzugsweise nach hinten abstehende Handgriffe (26), die dazu ausgebildet sind, den Handwagen (2) durch einen Benutzer in die Abstellposition oder eine Fahrposition zu schwenken.

7. Handwagen (2) nach Anspruch 6, wobei die Handgriffe (26) klappbar ausgebildet sind oder klappbar oder steckbar an dem Gestell (4) gehaltert sind.

8. Handwagen (2) nach einem der vorhergehenden Ansprüche, ferner aufweisend eine Ablagefläche (34), die an einer zu dem zumindest einen Stützrad (18) gerichteten Seite des Gestells (4) angeordnet ist und einen zumindest teilweise umlaufenden Rand (36) aufweist, sowie mindestens eine Arretiereinrichtung (40) an einer von der Ablagefläche (34) beabstandeten, darüber liegenden Position des Handwagens (2).

9. Handwagen (2) nach einem der vorhergehenden Ansprüche, wobei das Gestell (4) zwei Seitenwangen (46, 48) aufweist, und wobei sich zwischen aufrecht zu der Unterseite (8) verlaufenden Hinterkanten (50) der Seitenwangen (46, 48) eine zusätzliche Wandung (52) erstreckt.

10. Handwagen (2) nach Anspruch 9, wobei das Gestell (4) durch eine von der zusätzlichen Wandung (52) abgewandte nach vorne gerichtete Öffnung (54) zwischen den Seitenwangen (46, 48) zur Aufnahme eines Gegenstands (6) geöffnet ist.

11. Handwagen (2) nach Anspruch 9 oder 10, wobei das Gestell (4) an einem von der Unterseite (8) des Handwagens (2) abgewandten oberen Ende des Gestells (4) mindestens einen Haken (56) zum Einhängen eines Abfallbehälters (6) aufweist.

12. Handwagen (2) nach einem der vorhergehenden Ansprüche, wobei die Bremsflächen (25) jeweils einen austauschbaren Bremsbelag vorzugsweise aus Aluminium aufweisen.

13. Handwangen (2) nach einem der vorhergehenden Ansprüche, **dadurch gekennzeichnet, dass** die Handgriffe (26) vorzugsweise um die Radachse (12) oder eine dazu parallel angeordnete Achse schwenkbar angeordnet sind und am Gestell (4) seitlich Verriegelungsvorrichtungen (32) zum Festlegen der Handgriffe (26) in einer Arbeitsstellung vorgesehen sind.

14. Handwagen (2) nach einem der vorhergehenden Ansprüche, **dadurch gekennzeichnet, dass** ein vorzugsweise um die Radachse (12) oder eine parallel dazu angeordnete Achse schwenkbarer Bügel (60) vorgesehen ist, der sich zur Oberseite des Gestells (4) hin erstreckt und der mit einem ausklappbaren Bodenblech (52a) bewegungsgekoppelt ist, welches in ausgeklappter Stellung des Bügels (60) bodenparallel und in eingeklappter Stellung des Bügels (60) etwa senkrecht angeordnet ist.

## Claims

1. A single-axle hand trolly (2), comprising a frame (4) for receiving an object (6), comprising two wheels (10), which are rotatably mounted and which have a wheel axle (12) and which are arranged parallel to one another, for moving the hand trolly (2) on a contact surface (20), and comprising a braking device (14) arranged on the underside (8) of the trolly, wherein the braking device (14) has at least one lever element (22), which is pivotably mounted about a horizontal pivot axis (16) and which has at least one support wheel (18), which is spaced apart from the pivot axis (16) and which is rotatably mounted, for supporting on the contact surface (20), wherein the braking device (14) has braking elements (24), which are arranged on the lever element (22) and which extend to the wheels (10) and which in each case have a braking surface (25), which can be brought into contact with the respective wheel (10) and which are connected to the lever element (22), and wherein, in a parking position of the hand trolly (2) when the at least one support wheel (18) is supported on the contact surface (20), the braking device (14) is formed to thereby push the braking surfaces (25) against the wheels (10) in order to brake the wheels (10).

2. The hand trolly (2) according to claim 1, wherein the wheels (10) and the braking device (14) are arranged in such a way that, at least in the parking position, a center of gravity (30) of the hand trolly (2) lies in a region between the wheel axle (12) and the pivot axis (16) of the at least one support wheel (18).

3. The hand trolly (2) according to one of the preceding claims, wherein the braking element (24) is formed as a lever, which acts on a wheel (10) and which is arranged at an angle to the at least one lever element (22) and has a smaller length (l2) than the length (l1) of the at least one lever element (22).

4. The hand trolly (2) according to claim 2 or 3, wherein the two braking elements (24) are connected to one another in a rotationally fixed manner via a connecting element (62) extending between the braking elements (24).

5. The hand trolly (2) according to claim 4, wherein a cantilever arm (64) is arranged on the connecting element (62), which extends along the underside (8) and which holds the at least one support wheel (18) on an end facing away from the connecting element (62).

6. The hand trolly (2) according to one of the preceding claims, further having two hand grips (26), which are arranged laterally on the frame (4) and which preferably protrude rearward from the frame (4) and which are formed to pivot the hand trolly (2) into the parking position or a moving position by means of a user.

7. The hand trolly (2) according to claim 6, wherein the hand grips (26) are formed in a foldable manner or are mounted in a foldable or insertable manner on the frame (4).

8. The hand trolly (2) according to one of the preceding claims, further having a storage surface (34), which is arranged on a side of the frame (4) directed towards the at least one support wheel (18) and which has an at least partially circumferential edge (36), as well as at least one locking means (40) at a position of the hand trolly (2), which is spaced apart from the storage surface (34) and which is located there above.

9. The hand trolly (2) according to one of the preceding claims, wherein the frame (4) has two side webs (46, 48), and wherein an additional wall (52) extends between rear edges (50), which run upright to the underside (8), of the side webs (46, 48).

10. The hand trolly (2) according to claim 9, wherein the frame (4) is opened by means of an opening (54), which faces away from the additional wall (52) and which is directed forward, between the side webs (46, 48), for receiving an object (6).

11. The hand trolly (2) according to claim 9 or 10, wherein the frame (4) has at least one hook (56) for hooking in a waste container (6) on an upper end of the frame (4) facing away from the underside (8) of the hand trolly (2).

12. The hand trolly (2) according to one of the preceding claims, wherein the braking surfaces (25) in each case have a replaceable brake pad preferably made of aluminum.

13. The hand trolly (2) according to one of the preceding claims, **characterized in that** the hand grips (26) are pivotably arranged preferably about the wheel axle (12) or an axle arranged in parallel thereto, and locking devices (32) for securing the hand grips (26) in an operating position are provided laterally on the frame (4).

14. The hand trolly (2) according to one of the preceding claims, **characterized in that** a bracket (60) is provided, which is preferably pivotable about the wheel axle (12) or an axle arranged in parallel thereto and which extends towards the top side of the frame (4) and which is movably coupled to a base plate (52a), which can be folded out and which, in the folded-out position of the bracket (60), is arranged in parallel with the base and which, in folded-up position of the bracket (60), is arranged approximately perpendicularly.

## Revendications

1. Chariot à bras à un seul axe (2) doté d'un châssis (4) destiné à la réception d'un objet (6), comprenant deux roues (10) montées tournantes et comprenant un axe de roues (12) et étant disposées parallèlement l'une à l'autre, pour déplacer le chariot à bras (2) sur une surface support (20), et avec un dispositif de freinage (14) disposé sur la face inférieure (8) du chariot, le dispositif de freinage (14) comprenant au moins un élément de levier (22) monté pivotant autour d'un axe de pivotement (16) et au moins une roue de support (18) espacée de l'axe de pivotement (16) et montée tournante, pour l'appui sur la surface support (20), le dispositif de freinage (14) comprenant des éléments de freinage (24) disposés sur l'élément de levier (22) et s'étendant jusqu'aux roues (10) et comprenant, chacun, une surface de freinage (25) destinée à être mise en contact avec la roue (10) correspondante et étant reliés à l'élément de levier (22), et le dispositif de freinage (14) étant configuré pour presser alors, dans une position d'immobilisation du chariot à bras (2), lorsque ladite au moins une roue de support (18) est posée sur la surface support (20), les surfaces de freinage (25) aux roues (10) pour le freinage des roues (10).

2. Chariot à bras (2) selon la revendication 1, les roues (10) et le dispositif de freinage (14) étant disposés de façon que, au moins dans la position d'immobilisation, un centre de gravité (30) du chariot à bras (2) soit situé dans une zone entre l'axe de roue (12) et l'axe pivotement (16) de ladite au moins une roue de support (18).

3. Chariot à bras (2) selon l'une des revendications précédentes, l'élément de freinage (24) étant configuré comme un levier agissant sur une roue (10) qui est disposé sous un angle par rapport audit au moins un élément de levier (22) et présente une longueur moindre (l2) que la longueur (l1) dudit au moins un élément de levier (22).

4. Chariot à bras (2) selon la revendication 2 ou 3, les deux éléments de freinage (24) étant reliés l'un à l'autre de façon solidaire en rotation par un élément de liaison (62) s'étendant entre les éléments de freinage (24).

5. Chariot à bras (2) selon la revendication 4, un bras (64), qui s'étend le long de la face inférieure (8) et maintient ladite au moins une roue de support (18) à une extrémité opposée de l'élément de liaison (62), étant fixé à l'élément de liaison (62).

6. Chariot à bras (2) selon l'une des revendications précédentes, comprenant par ailleurs deux poignées (26), disposées latéralement au châssis (4) et s'écartant du châssis (4) de préférence vers l'arrière, qui sont configurées pour faire pivoter le chariot à bras (2) par un utilisateur dans la position d'immobilisation ou une position de marche.

7. Chariot à bras (2) selon la revendication 6, les poignées (26) étant configurées rabattables ou étant maintenues au châssis (4) de manière rabattable ou enfichable.

8. Chariot à bras (2) selon l'une des revendications précédentes, comprenant par ailleurs une surface de réception (34) qui est fixée à une face du châssis (4) tournée vers ladite au moins une roue de support (18) et comprend un bord (36) au moins partiellement circonférentiel, ainsi qu'au moins un dispositif d'arrêt (40) à une position du chariot à bras (2) espacée de la surface de réception (34) et au-dessus de celle-ci.

9. Chariot à bras (2) selon l'une des revendications précédentes, le châssis (4) comprenant deux parois latérales (46, 48), et une paroi supplémentaire (52) s'étendant entre des bords arrière (50) des parois latérales (46, 48) et verticales par rapport à la face inférieure (8).

10. Chariot à bras (2) selon la revendication 9, le châssis (4) étant ouvert, pour recevoir un objet (6), par une ouverture (54) entre les parois latérales (46, 48) orientée vers l'avant et opposée à la paroi supplémentaire (52).

11. Chariot à bras (2) selon la revendication 9 ou 10, le châssis (4) comprenant, à une extrémité supérieure du châssis (4) opposée à la face inférieure (8) du chariot à bras (2), au moins un crochet (56) pour suspendre un conteneur à déchets (6).

12. Chariot à bras (2) selon l'une des revendications précédentes, les surfaces de freinage (25) comprenant chacune une garniture de frein remplaçable, de préférence en aluminium.

13. Chariot à bras (2) selon l'une des revendications précédentes, **caractérisé en ce que** les poignées (26) sont disposées pivotantes, de préférence autour de l'axe de roue (12) ou d'un axe disposé parallèlement à celui-ci, et que des dispositifs de verrouillage (32) sont prévus latéralement au châssis (4) pour bloquer les poignées (26) dans une position de travail.

14. Chariot à bras (2) selon l'une des revendications précédentes, **caractérisé en ce qu'**il est prévu un arceau (60) pouvant pivoter de préférence autour de l'axe de roue (12) ou d'un axe disposé parallèlement à celui-ci, arceau qui s'étend vers la face supérieure du châssis (4) et qui est relié de façon solidaire en mouvement à une tôle de fond (52a) escamotable qui, dans la position ouverte de l'arceau (60), est disposé parallèlement au fond et, dans la position fermée de l'arceau (60), sensiblement verticalement.
